# DEMANDE DE BREVET EUROPEEN

(11) **EP 4 817 805 A1**
(43) Date de publication de la demande: **07.10.2026**
(21) Numéro de dépôt: 26167305.7
(22) Date de dépôt: 24.03.2026
(51) Int. Cl.: B25J 9/10, B25J 5/00, B25J 13/08

(54) **SYSTEME DE MANUTENTION D'OBJET ET ENSEMBLE CORRESPONDANT**

(30) Priorité: 31.03.2025 FR 2503314
(71) Demandeur: Neoditech, 44330 Mouzillon (FR)
(72) Inventeur: JONCHERAY, Denis, 44190 CLISSON (FR)
(74) Mandataire: Ipsilon

(57) **Abrégé**

L'invention concerne un système (1) de manutention d'objet, comprenant une base (100) orientable, un bras de levage (2) porté par la base et entrainable à pivotement et associé à un mécanisme de parallélogramme, un dispositif de liaison à double pivot (5) articulé au bras de levage, un bras de manutention (3) articulé au dispositif de liaison à double pivot (5) et entrainable à pivotement et associé à un mécanisme de parallélogramme ; un dispositif de liaison à pivot (6) articulé au bras de manutention (3) et un système de préhension (4) porté par le dispositif de liaison à pivot (6). L'invention concerne aussi un ensemble correspondant.

## Description

### DOMAINE DE L'INVENTION

La présente invention concerne de manière générale les systèmes de manutention d'objet.

### ART ANTERIEUR

On connaît de l'état de la technique des systèmes de manutention (ou manipulation) d'objet, appelées couramment « bras-robots » qui permettent à un opérateur de commander ledit bras-robot pour saisir un objet à un endroit donné et déplacer l'objet saisi afin de le reposer à un autre endroit.

Certains bras-robots comprennent un ensemble de bras muni d'un système de préhension auquel est couplé un dispositif de commande pour permettre à l'opérateur de commander le système de préhension tout en le déplaçant avec peu d'effort de la part de l'opérateur. En effet, le poids du système de préhension et de l'objet sont repris par le reste du bras-robot. L'opérateur peut ainsi accompagner le déplacement du système de préhension pour saisir un objet dans le champ opérationnel du bras-robot et aussi pour déposer ledit objet à un endroit donné.

Cependant, on constate que l'opérateur peut être gêné par des parties de l'installation au cours du déplacement du système de préhension qu'il accompagne. En effet, lorsqu'il souhaite changer de position par rapport au système de préhension, l'opérateur peut être gêné par l'ensemble de bras qui porte ledit système de préhension.

Il est souhaitable de pouvoir améliorer la précision et la fluidité de déplacement du système de préhension pour atteindre une position souhaitée, en particulier dans un environnement étroit, par exemple dans un conteneur.

Il convient que le système de manutention permette à l'opérateur de déplacer le système de manutention à la position souhaitée tout en maintenant son dos bien droit lorsqu'il commande la saisie ou la pose d'un objet quelle que soit la position de l'objet dans le champ opérationnel de l'installation.

La présente invention a pour but de proposer un nouveau système de manutention et ensemble correspondant permettant de pallier au moins partiellement un ou plusieurs des problèmes exposés ci-dessus.

### RESUME DE L'INVENTION

A cet effet, l'invention a pour objet un système de manutention d'objet, par exemple de cartons ou colis, par exemple stocké dans un conteneur (ou container), caractérisé en ce que ledit système comprend :
- une base présentant une face de dessous qui s'étend dans un plan, la base étant montée sur un dispositif d'orientation permettant à la base de pivoter autour d'un axe, dit premier axe vertical,
- un premier bras, appelé bras de levage, porté par la base et monté pivotant par rapport à la base entre une position abaissée et une position levée, autour d'un axe, appelé premier axe horizontal, qui est orthogonal audit premier axe vertical, et parallèle au plan de la face de dessous de la base ;
- un système d'entrainement en déplacement du bras de levage configuré pour entrainer en pivotement le bras de levage, autour dudit premier axe horizontal ;
- un deuxième bras, appelé bras de manutention;
- un dispositif de liaison à double pivot articulé au bras de levage autour d'un deuxième axe, dit deuxième axe horizontal, le bras de manutention étant articulé au dispositif de liaison à double pivot autour d'un axe, dit troisième axe horizontal;
- un système d'entrainement en déplacement du bras de manutention configuré pour entrainer en pivotement le bras de manutention par rapport au dispositif de liaison à double pivot, autour dudit troisième axe horizontal ;
- un dispositif de liaison à pivot articulé au bras de manutention autour d'un axe , dit quatrième axe horizontal, parallèle au troisième axe horizontal ;
- un système de préhension porté de manière directe ou indirecte par le dispositif de liaison à pivot, le système de préhension étant monté mobile à pivotement autour d'un axe, appelé axe de pivotement vertical interne (ou axe pivot vertical), du dispositif de liaison à pivot, orthogonal audit quatrième axe horizontal ;

le bras de levage comprenant un premier mécanisme, appelé premier mécanisme de parallélogramme, configuré pour maintenir l'orientation du dispositif de liaison à double pivot au cours du pivotement du bras de levage par rapport à la base (autour du premier axe horizontal) ;
le bras de manutention comprenant un deuxième mécanisme, appelé deuxième mécanisme de parallélogramme, configuré pour maintenir l'orientation du dispositif de liaison à pivot au cours du pivotement du bras de manutention par rapport au dispositif de liaison à double pivot autour du troisième axe horizontal.

Selon un aspect particulier, le deuxième axe horizontal est parallèle audit premier axe horizontal. Avantageusement, le troisième axe horizontal est orthogonal aux axes pivots internes du dispositif à double pivot.

Grâce au premier mécanisme de parallélogramme, le dispositif de liaison à double pivot est déplacé parallèlement à lui-même lors du pivotement en monte et baisse du bras de levage, ce qui permet de conserver la verticalité des axes de pivotement verticaux internes du dispositif de liaison à double pivot. Grâce au deuxième mécanisme de parallélogramme, le dispositif de liaison à pivot est déplacé parallèlement à lui-même lors du pivotement en monte et baisse du bras de manutention ce qui permet de conserver la verticalité de l'axe de pivotement vertical interne du dispositif de liaison à pivot.

La combinaison de la base orientable, du bras de levage pivotant et du bras de manutention pivotant liés entre eux par le dispositif à double pivot permet d'atteindre aisément et de saisir grâce au système de préhension relié au bras de manutention par le dispositif à pivot, un objet lourd, tout en travaillant dans une posture confortable. Une telle conception du système de manutention permet de manipuler aisément un objet dans l'espace.

En particulier, la combinaison des articulations actives des bras et des articulations de préférence passives du dispositif à double pivot et du dispositif à pivot, et du dispositif d'orientation de la base, permet de manipuler aisément des charges, par exemple jusqu'à 100 kg, avec une course angulaire importante dans le plan vertical et dans le plan horizontal (par référence à une orientation de la base dans le plan horizontal), tout en conservant l'orientation, en particularité la verticalité des axes de pivotement interne du dispositif à double pivot et de l'axe de pivotement interne du dispositif à pivot grâce aux mécanismes de parallélogramme.

Le maintien de la verticalité des axes de pivotement interne du dispositif à double pivot permet d'éviter que le bras de manutention ne se déplace par gravité dans le cas de la passivité des axes de pivotement interne du dispositif à double pivot et ne vienne heurter un objet ou l'opérateur. De manière similaire, le maintien de la verticalité de l'axe de pivotement interne du dispositif à pivot permet d'éviter que le système de préhension ne se déplace par gravité dans le cas de la passivité de l'axe de pivotement interne du dispositif à pivot.

Le système de manutention offre ainsi une réduction de la pénibilité due au transport de charges lourdes et encombrantes dans des environnements variés.

Le système peut aussi comporter une ou plusieurs des caractéristiques suivantes prises dans toute combinaison techniquement admissible.

Selon un mode de réalisation, le premier mécanisme de parallélogramme comprend une barre, de préférence en acier, de préférence logée dans le bras de levage, dont une extrémité est articulée à un élément solidaire de la base, l'autre extrémité étant articulée à un élément du dispositif de liaison à double pivot.

Selon un mode de réalisation, le deuxième mécanisme de parallélogramme comprend un système de câble, de préférence logé dans le bras de manutention, relié d'une part à une poulie qui relie le bras de manutention au dispositif de liaison à double pivot, et relié d'autre part à une poulie qui relie le dispositif de liaison à pivot audit bras de manutention.

Selon un mode de réalisation, le système d'entrainement en déplacement du bras de manutention comprend :
- un système de commande de déplacement du système de câble ;
- un moteur, de préférence électrique, de préférence muni d'un réducteur, qui permet d'actionner le système de commande de déplacement du système de câble pour déplacer le système de câble de sorte que, les poulies du bras de manutention étant entrainées en pivotement par le système de câble, le bras de manutention pivote en montée ou en descente.

Selon un mode de réalisation, le système de commande de déplacement du système de câble comprend :
- un système de vis, de préférence vis à billes,
- un chariot configuré pour être déplaçable en translation par actionnement de la vis à bille, le système de câble étant fixé au chariot ;
ledit moteur étant configuré pour actionner le système de vis pour déplacer le chariot et ainsi le système de câble.

Selon un mode de réalisation, le système d'entraînement en déplacement du bras de manutention est logé dans le bras de manutention.

Selon un mode de réalisation, le dispositif de liaison à double pivot qui relie le bras de manutention au bras de levage, comprend :
- un corps de liaison central;
- une première partie montée mobile à pivotement à l'extrémité du bras de levage autour dudit deuxième axe horizontal (axe parallèle audit premier axe horizontal qui est encore appelé axe de pivotement de levage),
   ladite première partie étant aussi montée mobile à pivotement sur le corps de liaison central autour d'un axe orthogonal audit deuxième axe horizontal, appelé premier axe de pivotement vertical interne;
- une deuxième partie montée mobile à pivotement sur le corps de liaison central autour d'un axe, appelé deuxième axe de pivotement vertical interne, qui est parallèle audit premier axe de pivotement vertical interne;
la deuxième partie étant aussi montée mobile à pivotement à l'extrémité du bras de manutention, qui est opposée à l'extrémité dudit bras de manutention équipée du dispositif de liaison à pivot, autour dudit troisième axe horizontal qui est orthogonal à l'axe de pivotement vertical interne de la deuxième partie.

Les axes de pivotement interne verticaux du dispositif de liaison à double pivot sont parallèles et écartés l'un de l'autre.

Selon un mode de réalisation, le dispositif de liaison à double pivot, le dispositif de liaison à pivot, et, de préférence, le dispositif d'orientation sont passifs. On entend par passif le fait que la ou les mobilités de pivotement correspondantes sont libres, i.e. ne sont pas motorisées.

Selon un mode de réalisation, le système comprend :
- un système de capteur d'effort configuré pour mesurer un effort appliqué par un opérateur sur le système de manutention pour le déplacement du système de préhension ;
- une unité de pilotage configurée pour commander l'un ou chacun des systèmes d'entrainement pour assister l'opérateur dans le déplacement du système de préhension.

Selon un mode de réalisation, le système de manutention comprend :
- une turbine permettant de générer un flux d'air de soufflage et un flux d'air d'aspiration ;
- un distributeur configuré pour, selon une première configuration, diriger le flux d'air de soufflage vers une ouverture à l'air libre et diriger le flux d'air d'aspiration à une entrée du système de préhension pour permettre de saisir un objet par aspiration avec le système de préhension ; et
selon une deuxième configuration, diriger le flux d'air d'aspiration vers l'ouverture d'air libre et diriger le flux d'air de soufflage vers l'entrée du système de préhension pour permettre de souffler et relâcher un objet saisi par le système de préhension.

L'invention concerne aussi un ensemble de manutention comprenant un système de manutention selon l'un quelconque des modes de réalisation précédents; et une structure mobile, de préférence montée sur roues, ladite structure mobile comprenant :
- un châssis qui porte ledit système de manutention;
- un système d'articulation permettant au système de manutention de pivoter autour d'un axe, dit axe d'inclinaison, orthogonal à l'axe de pivotement du dispositif d'orientation de la base (ou parallèle au plan de la face de dessous de la base);
- un capteur d'inclinaison permettant de mesurer l'inclinaison, par rapport à l'horizontale, du châssis de la structure mobile qui porte ledit système de manutention;
- un système de commande d'inclinaison permettant de commander l'inclinaison du système de manutention autour dudit axe d'inclinaison par rapport au châssis de la structure mobile ;
- une unité de pilotage configurée pour piloter le système de commande d'inclinaison en fonction de l'inclinaison mesurée par le capteur, de manière à maintenir vertical chacun des axes de pivotement verticaux du dispositif à double pivot, du dispositif à pivot, et du dispositif d'orientation.

Selon un mode de réalisation, le système de commande d'inclinaison comprend :
- un bras de levier fixé à un support qui est monté articulé sur le châssis autour dudit axe d'inclinaison du système de manutention, le système de manutention étant porté par le support par l'intermédiaire du dispositif d'orientation ;
- un système de commande de déplacement du bras de levier entre une position haute et une position basse.

Selon un mode de réalisation, le système de commande de déplacement du bras de levier comprend un vérin, de préférence linéaire, lié au bras de levier.

Selon un mode de réalisation, la structure mobile comprend des roues directionnelles motorisées arrière et des roues folles omnidirectionelles avant.

Selon un mode de réalisation, le bras de levage présente une longueur comprise entre 1000 et 1400 mm, par exemple 1200 mm.

Selon un mode de réalisation, le bras de manutention présente une longueur comprise entre 600 et 1000 mm, par exemple 800 mm.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la Figure 1 est une vue en perspective d'un système de manipulation selon un mode de réalisation de l'invention, à l'état retiré d'une partie des carter des bras pour visualiser les mécanisme associés aux bras;
- [Fig. 2] la Figure 2 est une vue en perspective du système de manipulation de la Figure 1, selon un autre angle;

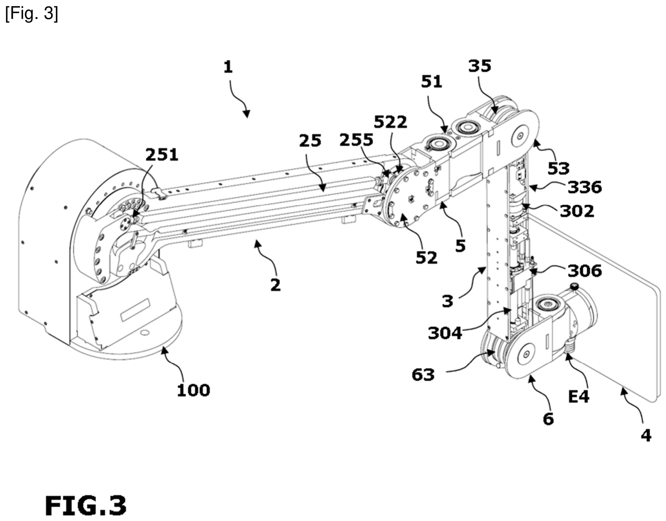

- [Fig. 3] la Figure 3 est une vue en perspective du système de manipulation de la Figure 1, selon un positionnement différent des bras, par exemple pour prendre un objet tel qu'un carton en position basse;

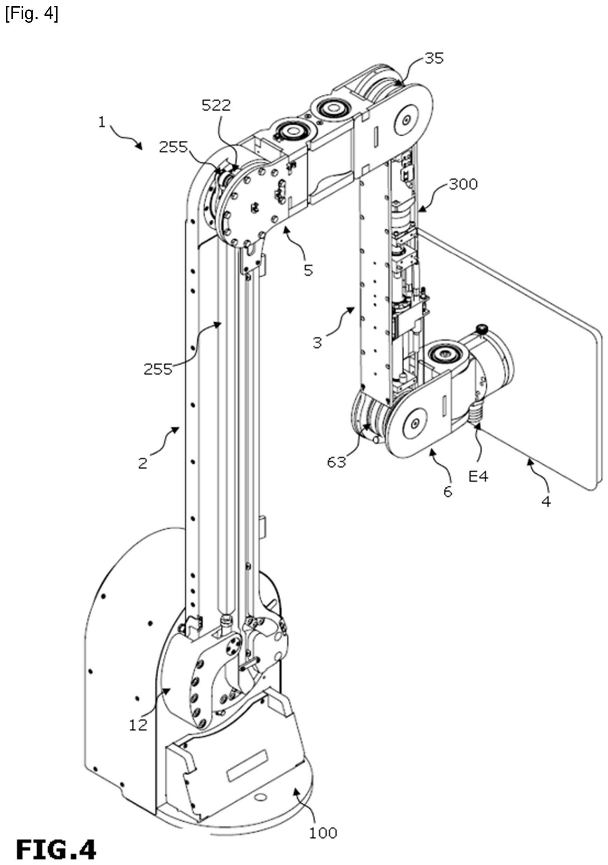

- [Fig. 4] la Figure 4 est une vue en perspective du système de manipulation de la Figure 1, selon un positionnement différent des bras, par exemple pour prendre un objet tel qu'un carton en position intermédiaire;

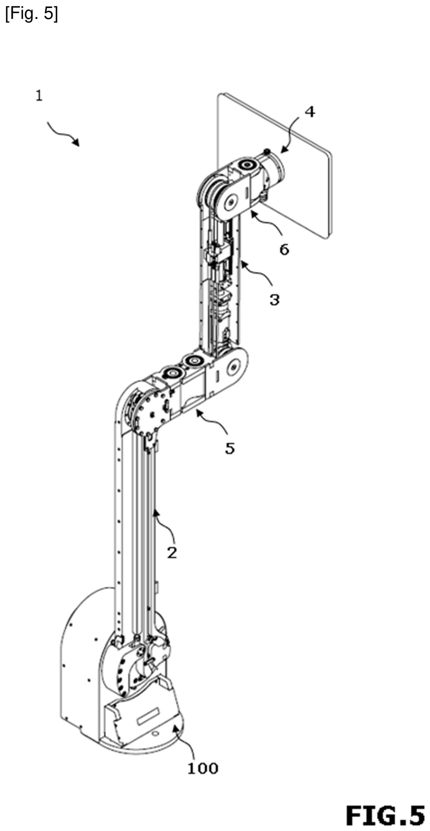

- [Fig. 5] la Figure 5 est une vue en perspective du système de manipulation de la Figure 1, selon un positionnement différent des bras, par exemple pour prendre un objet tel qu'un carton en position haute;
- [Fig. 6] la Figure 6 est une vue en perspective de dessous du système de manipulation de la Figure 1, pour visualiser un dispositif d'orientation auquel est fixé la base du système;

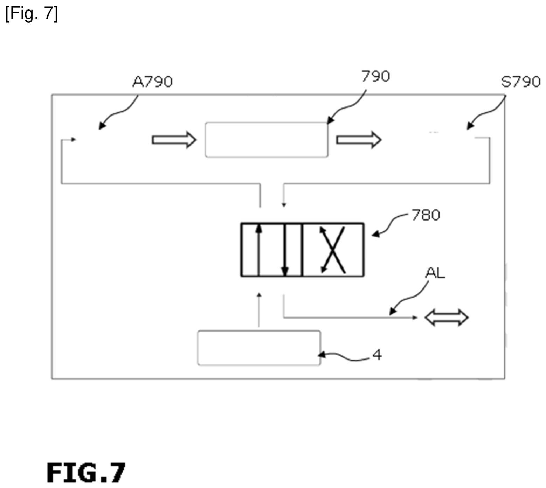

- [Fig. 7] la Figure 7 est une vue schématique sous forme de schéma blocs d'un système de préhension pour un système de manutention selon un mode de réalisation;
- [Fig. 8] la Figure 8 est une vue en perspective du système de manipulation de la Figure 1; monté sur une structure mobile, en particulier roulante, qui comprend un système de commande d'inclinaison du système de manipulation permettant de compenser l'inclinaison du châssis de la structure mobile par rapport à l'horizontal pour maintenir l'horizontalité de la base du système de manutention et ainsi maintenir la verticalité des axes de pivotement interne du dispositif à double pivot et du dispositif à pivot;
- [Fig. 9] la Figure 9 est une vue en perspective de l'ensemble du système de manutention et de la structure mobile de la Figure 8, selon un autre angle pour montrer le montage articulé du support qui reçoit le système de manutention par rapport au châssis de la structure roulante, l'inclinaison du support étant contrôlable à l'aide dudit système de commande d'inclinaison;
- [Fig. 10] la Figure 10 est une vue de côté de l'ensemble du système de manutention et de la structure mobile de la Figure 8, selon une configuration extrême d'inclinaison du système de manutention dans un sens;
- [Fig. 11] la Figure 11 est une vue de côté de l'ensemble du système de manipulation et de la structure roulante de la Figure 10, selon une autre configuration extrême d'inclinaison du système de manipulation en sens opposé.

### DESCRIPTION DETAILLEE

Des modes de réalisation sont décrits ci-après avec référence aux dessins joints. Des numéros similaires font référence à des éléments similaires sur tous les dessins. Cependant, l'invention peut être mise en œuvre sous de nombreuses formes différentes et ne devrait pas être interprétée comme étant limité aux modes de réalisation exposés ici. L'étendue de l'invention est définie par les revendications jointes.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

Il est proposé un système 1 de manutention (ou manipulation) d'objet, par exemple de cartons ou colis. Lesdits objets sont par exemple stockés dans un conteneur. Comme détaillé ci-après, il est aussi proposé un ensemble comprenant une structure mobile 9 qui porte ledit système de manutention 1 et qui peut être amenée dans un conteneur pour retirer des objets, tels que des cartons, de manière aisée et fluide pour l'opérateur.

En particulier, la conception du système de manutention permet de limiter son encombrement et ainsi de faciliter ses mouvements dans un environnement contraint, tel que l'intérieur d'un conteneur.

Le système de manutention permet à un opérateur de déplacer le système de préhension de manière fluide et dans un encombrement réduit pour atteindre la position et l'orientation souhaitées pour saisir et déposer un objet.

### Base

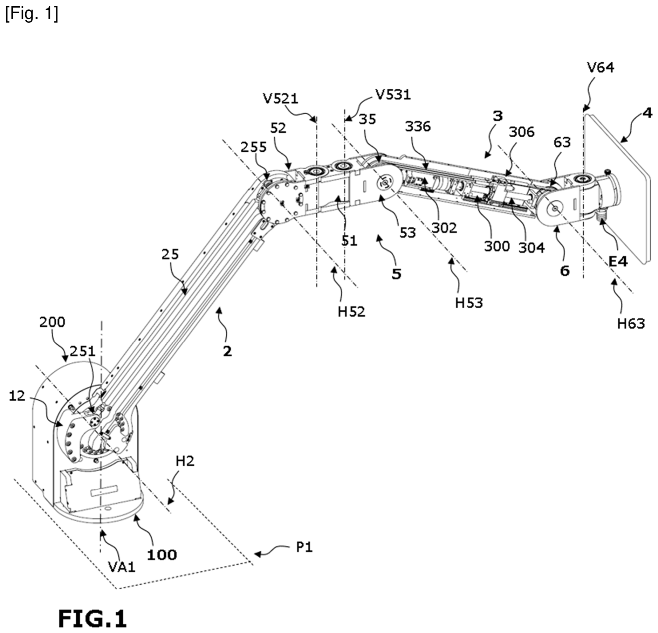

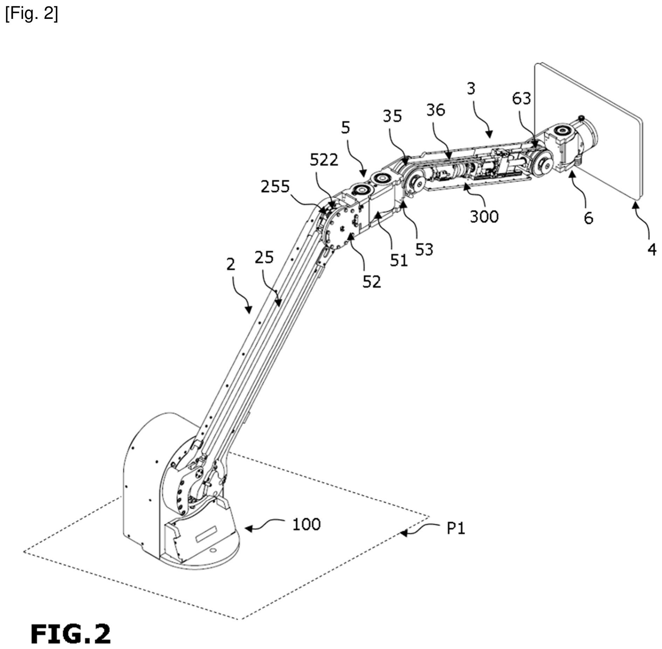

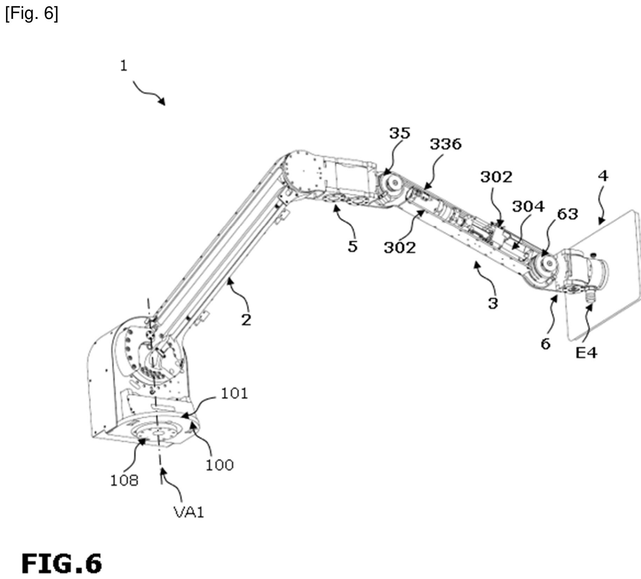

Le système de manutention 1 comprend une base 100. La face de dessous 101 de la base s'étend dans un plan P1 donné, comme par exemple illustré plus particulièrement aux figures 1, 2 et 6. La base 100 est montée sur un dispositif d'orientation 108, tel qu'une couronne d'orientation, permettant à la base 100, et donc au système de manutention 1, de pivoter autour d'un axe VA1 dit vertical, orthogonal au plan P1 de la base 101.

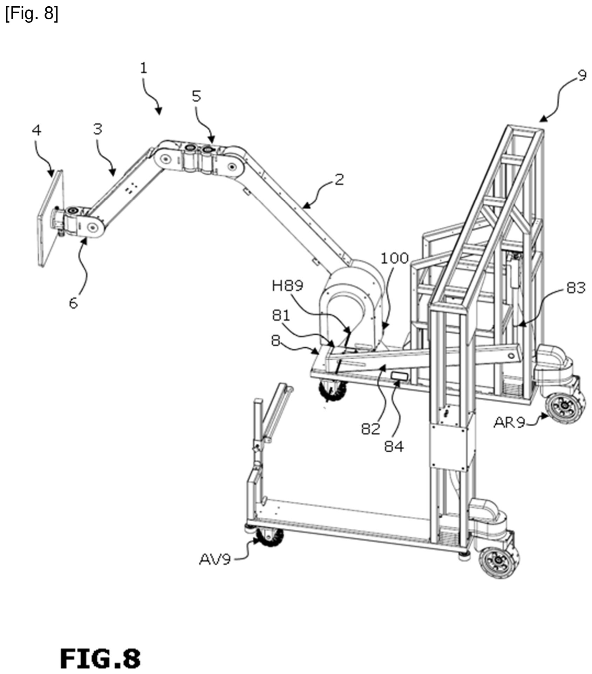

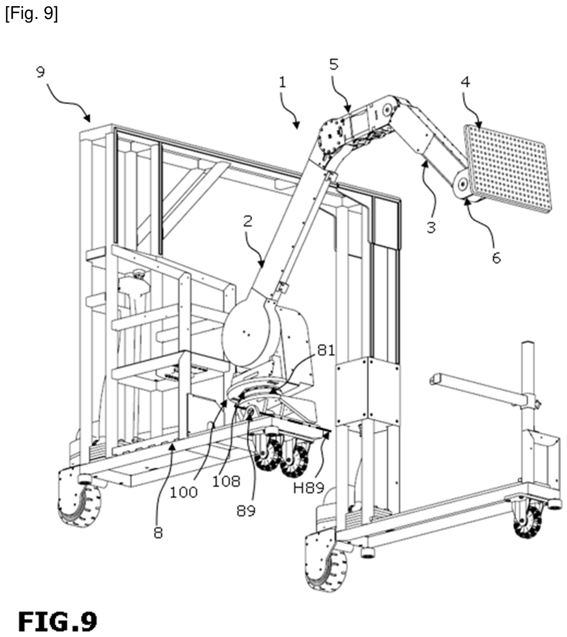

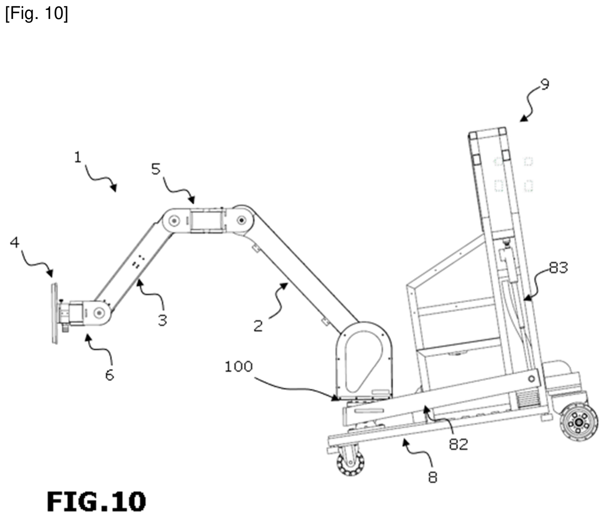

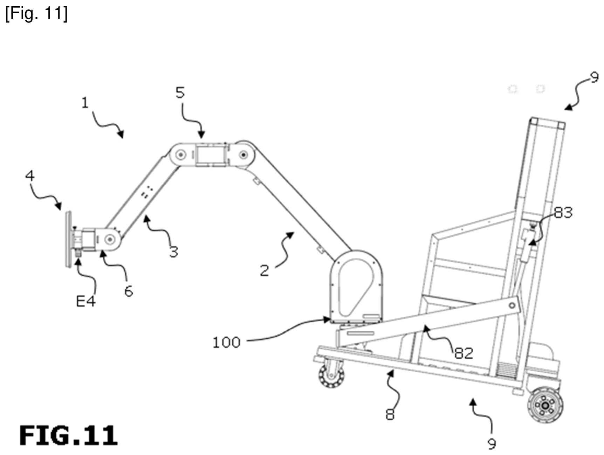

Comme détaillé ci-après et par exemple illustré aux figures 8 à 11, le dispositif d'orientation 108 est monté sur un châssis 8 d'une structure mobile 9 qui permet le déplacement au sol. Le sol est par exemple le sol d'un terrain, d'un entrepôt ou le plancher ou une rampe d'un conteneur.

### Bras de levage

Le système de manutention 1 comprend un bras de levage 2 porté par la base 100. Le bras de levage 2 est monté pivotant par rapport à la base 100 autour d'un axe H2, appelé premier axe horizontal (voir par exemple Figure 1). Ledit premier axe H2 horizontal est orthogonal audit premier axe vertical VA1, et parallèle au plan P1 de la face de dessous 101 de la base 100. Autrement dit, l'axe H2 est orthogonal à l'axe longitudinal du bras 2 et à l'axe de pivotement VA1 de la base 100.

Le bras de levage 2 est monté pivotant entre une position abaissée et une position relevée, par exemple dans une plage angulaire de 90°, de préférence dans la plage [0° et 90°] par rapport audit plan P1 de la base 100.

### Système d'entrainement en déplacement du bras de levage

Le système de manutention 1 comprend un système 200 d'entrainement en déplacement du bras de levage 2 configuré pour entrainer en pivotement le bras de levage 2 autour de l'axe H2. Le système 200 d'entrainement en déplacement du bras de levage 2 comprend une motorisation configurée pour entrainer en pivotement le bras de levage 2 par rapport à la base 100 autour de l'axe H2. La motorisation peut comprendre un servomoteur, de préférence brushless (ou moteur sans balais en français), et un réducteur permettant de transmettre le mouvement de pivotement au bras de levage 2.

### Dispositif de liaison à double pivot

Un dispositif de liaison à double pivot 5 est monté articulé au bras de levage 2 autour d'un axe H52, à l'extrémité du bras de levage 2 opposée à celle qui est montée pivotante sur la base 100. L'axe H52 est parallèle à l'axe H2.

Le dispositif de liaison à double pivot 5 qui relie un bras de manutention 3 au bras de levage 2, comprend un corps de liaison 51 central et une première partie 52 montée mobile à pivotement à l'extrémité du bras de levage 2 autour de l'axe H52.

Ladite première partie 52 est aussi montée mobile à pivotement sur le corps de liaison 51 central autour d'un pivot interne d'axe V521 (axe de pivotement vertical interne), parallèle à l'axe VA1, orthogonal à l'axe H2 de pivotement de levage et ainsi orthogonal à l'axe H52.

Le dispositif de liaison à double pivot 5 comprend aussi une deuxième partie 53 montée mobile à pivotement sur le corps de liaison 51 central autour d'un pivot interne d'axe V531 (axe de pivotement vertical interne), appelé axe V531 de pivotement vertical, qui est parallèle à l'axe V521 de pivotement vertical de la première partie 52. La deuxième partie 53 est aussi montée mobile à pivotement à l'extrémité du bras de manutention 3 qui est opposée à l'extrémité dudit bras de manutention 3 qui est équipée du dispositif de liaison à pivot 6, autour d'un axe H53, parallèle au plan P1 et orthogonal à l'axe V531 de pivotement vertical de la deuxième partie 53.

### Mécanisme de parallélogramme du bras de levage

Le bras de levage 2 comprend un mécanisme de parallélogramme configuré pour maintenir l'orientation du dispositif de liaison à double pivot 5 au cours du pivotement du bras de levage 2.

Le mécanisme de parallélogramme du bras de levage 2 permet en particulier de maintenir l'orientation, de préférence la verticalité, des axes de pivotement V521 et V531 du dispositif de liaison à double pivot 5.

Le mécanisme de parallélogramme comprend une barre 25, de préférence en acier, dont une extrémité 251 est articulée à un élément 12 solidaire de la base 100. L'autre extrémité 255 de la barre 25 est articulée à un élément 522 du dispositif de liaison à double pivot 5. La barre 25 forme ainsi une biellette.

Le corps de la barre 2 et la barre 25 forment avec la base 1 et l'élément 522 du dispositif de liaison à double pivot 5, un parallélogramme déformable permettant de maintenir l'orientation du dispositif de liaison à double pivot 5 lors du pivotement du bras de levage 2.

L'élément 522 du dispositif de liaison à double pivot 5 est monté pivotant sur l'extrémité du bras 2 pour permettre au dispositif à double pivot 5 de pivoter par rapport au bras de levage 2 autour de l'axe H52. En particulier, la distance entre l'axe H52 et l'axe d'articulation de l'extrémité 255 de la barre 25 à l'élément 522 est égale à la distance entre l'axe H2 et l'axe d'articulation de l'extrémité 251 de la barre 25 à l'élément 12 solidaire de la base 100.

Autrement dit, une extrémité 251 est articulée à la base 100, et l'autre extrémité 255 est articulée à la première partie 52 du dispositif 5 de liaison double pivot. La barre 25 forme ainsi avec la base 1, le bras de levage 2 et le dispositif 5 de liaison double pivot, un système de parallélogramme déformable permettant de déplacer le dispositif 5 de liaison double pivot parallèlement à lui-même lorsque le bras de levage 2 est levé ou abaissé.

### Bras de manutention

Le bras de manutention 3 du système de manutention 1 est articulé au dispositif de liaison à double pivot 5 autour de l'axe H53 qui est parallèle au plan P1 et orthogonal à l'axe longitudinal du bras de manutention 3, par exemple dans une plage angulaire de 180 °, de préférence [-90°; +90] par rapport au plan P1.

Le bras de manutention 3 est muni d'un système 300 d'entrainement en déplacement dudit bras de manutention 3. Le système 300 d'entrainement est configuré pour entrainer en pivotement le bras de manutention 3 autour dudit troisième axe horizontal H53.

### Mécanisme de parallélogramme du bras de manutention

Le mécanisme de parallélogramme comprend un système de câble 336 relié d'une part à une poulie 35 qui relie le bras de manutention 3 au dispositif de liaison à double pivot 5 et d'autre part à une poulie 63 qui relie le dispositif de liaison à pivot 6 audit bras de manutention 3. Le système de câble 336 comprend au moins un câble, de préférence plusieurs câbles.

Le système de câble 336 présente ainsi une extrémité qui est liée à une poulie 63 et une autre extrémité qui est liée à la poulie 35 pour former avec le corps du bras 3 un parallélogramme déformable permettant de maintenir l'orientation du dispositif de liaison à pivot 6 lors du pivotement du bras de manutention 3.

On peut prévoir qu'une des extrémités du système de câble 336 soit fixée à la poulie correspondante 35 et que l'autre extrémité de câble 336 soit liée à la poulie correspondante 63 par un système de retenue qui permet de maintenir tendu le système de câble lorsque le pivotement du dispositif de liaison à pivot 6 est laissé libre autour de l'axe H63.

### Système d'entrainement en déplacement du bras de manutention

Le système 300 d'entrainement en déplacement du bras de manutention 3 comprend un système de commande de déplacement du système de câble 336 et un moteur 302, de préférence électrique, de préférence muni d'un réducteur.

Le moteur 302 permet d'actionner le système de commande de déplacement du système de câble 336 pour déplacer le système de câble 336 de sorte que les poulies 35, 63 du bras de manutention 3 sont entrainées en pivotement, en particulier en synchronisme, par le système de câble 336, ce qui entraine le pivotement du bras de manutention 3 par rapport au dispositif double pivot 5, en montée ou en descente.

Le système de commande de déplacement du système de câble 336 comprend un système de vis 304, de préférence vis à billes, et un chariot 306 configuré pour être déplaçable en translation par actionnement de la vis.

Le système de câble 336 est fixé au chariot 306. Ledit moteur 302 est configuré pour actionner le système de vis 304 pour déplacer le chariot 306 et ainsi le système de câble 336.

Autrement dit, le système d'entraînement 300 permet d'entraîner en synchronisme les poulies 35, 63 du bras de manutention 3 four faire pivoter le bras de manutention 3 par rapport au dispositif à double pivot 5 dans le sens d'une montée ou d'un abaissement du bras de manutention.

Le système de câble 336 relie les deux poulies 35,63 de sorte que la levée du bras de manutention 3 par pivotement autour de la poulie 35, résultant du déplacement du système de câble 336 commandé par le moteur 302, entraîne aussi le pivotement de la poulie 63, et ainsi, à la manière d'un parallélogramme, le maintien de l'orientation du dispositif à pivot 6 au cours du pivotement du bras de manutention 3.

Le système d'entraînement 300 en déplacement du bras de manutention 3 est logé dans le bras de manutention 3. Le système d'entraînement 300 est couvert par un carter qui le protège de la poussière et de l'humidité.

### Dispositif de liaison à pivot

Un dispositif de liaison à pivot 6 est monté articulé au bras de manutention 3 à une extrémité du bras de manutention 3 opposée à celle articulée au dispositif de liaison à double pivot 5. Le dispositif de liaison à pivot 6 est monté pivotant par rapport au bras de manutention 3 autour de l'axe H63 de la poulie 63. L'axe H63 est parallèle au plan P1 et orthogonal à l'axe longitudinal du bras de manutention 3. Le dispositif de liaison à pivot 6 comprend un pivot interne d'axe V64 (axe de pivotement vertical interne) orthogonal au plan P1, auquel est couplé le système de préhension 4 pour pivoter autour dudit axe V64.

Un système de préhension 4, encore appelé effecteur, est porté par le dispositif de liaison à pivot 6 en étant articulé à la liaison pivot dudit dispositif 6. le système de préhension 4 est ainsi mobile à pivotement par rapport à au dispositif 6 autour de l'axe pivot vertical V64 du dispositif de liaison à pivot 6.

Le bras de manutention 3 comprend un deuxième mécanisme, appelé deuxième mécanisme de parallélogramme 336, configuré pour maintenir l'orientation du dispositif de liaison à pivot 6 au cours du pivotement du bras de manutention 3.

Le mécanisme de parallélogramme du bras de levage 2 permet en particulier de maintenir l'orientation, de préférence la verticalité, de l'axe de pivotement V64 du dispositif de liaison à pivot 6.

Avantageusement, le dispositif de liaison à double pivot 5, le dispositif de liaison à pivot 6 sont de type passifs au sens où les pivots d'axes V521, V531, V64 sont libres, i.e. ne sont pas commandés par moteur. De préférence le dispositif d'orientation 108 est aussi passif.

L'opérateur peut ainsi déplacer le système de préhension librement dans un plan parallèle au plan P1 sans motorisation. A l'inverse, les mobilités de pivotement des bras 2, 3 sont actives au sens où une motorisation est utilisée pour faire pivoter chacun des bras 2, 3.

Lorsque la face de dessous 101 de la base 100 est horizontale, i.e. lorsque l'axe de pivotement VA1 de la couronne d'orientation est vertical, alors les axes H2, H52, H53, H63 sont horizontaux et les axes VA1, V521, V531, V64 sont verticaux.

Avantageusement, les axes H52 et V521 ne sont pas sécants (autrement dit, lesdits axes sont écartés l'un de l'autre). Il en est de même pour les axes H53 et V531, et les axes H63 et V64.

Le système de parallélogramme du bras de levage 2 et le système de parallélogramme du bras de manutention 3 permettent de conserver respectivement l'orientation des axes V521, V531, et de l'axe V64.

### Système de préhension

Le système de préhension 4 est associé à une turbine 790 permettant de générer un flux d'air de soufflage S790 et un flux d'air d'aspiration A790; et un distributeur 780 aptes à présenter deux configurations pour permettre de sélectionner une aspiration ou un soufflage au niveau du système de préhension 4.

Selon une première configuration, le distributeur 780 dirige le flux d'air de soufflage S790 vers une ouverture à l'air libre AL et dirige le flux d'air d'aspiration A790 à l'entrée E4 du système de préhension 4 pour permettre de saisir un objet par aspiration avec le système de préhension 4.

Selon une deuxième configuration, le distributeur 780 dirige le flux d'air de soufflage S790 vers l'entrée E4 du système de préhension 4 et diriger le flux d'air d'aspiration vers l'ouverture d'air libre AL pour permettre de souffler et de relâcher efficacement un objet saisi par le système de préhension 4.

Le distributeur 780 permet ainsi de réinjecter l'air soufflé par la turbine au niveau du système de préhension 4 (l'effecteur). La configuration peut être contrôlée par un bouton, par exemple électrique, pour choisir entre aspiration et soufflage au niveau du système de préhension 4.

Le système de préhension 4 peut comprendre des caissons de vide et/ou des ventouses pour manipuler plusieurs objets, tels que cartons, simultanément ou avec un déport de charge.

Avantageusement, un système de détection d'efforts permet de détecter que l'opérateur souhaite un déplacement dans une direction et un sens donné et de commander la mobilité du bras de manutention 3 et du bras de levage 2 à l'aide d'une unité de pilotage pour accompagner le déplacement initié par l'opérateur afin de limiter l'effort à fournir par l'opérateur sur le système de manutention 1 pour amener le système de préhension 4 à la position souhaitée.

Selon un mode de réalisation, l'opérateur peut manipuler le système de préhension 4 à l'aide d'organes de type poignée, par exemple montés sur le système de préhension, pour amener le système de préhension à la position souhaitée, de préférence en coopération avec au moins une partie des systèmes d'entrainement 200, 300 pilotés par l'unité de traitement en fonction de l'effort détecté appliqué par l'opérateur sur le système.

De préférence, le système de préhension 4 est muni d'une ou plusieurs poignées disposées par exemple d'un côté ou de part et d'autre du dispositif à pivot 6 pour permettre à l'opérateur de saisir et déplacer le système de préhension 4 à la position souhaitée.

Le déplacement du système de préhension (préhenseur) commandé par l'utilisateur peut résulter de l'actionnement d'une ou plusieurs mobilités passives du dispositif d'orientation 108, du dispositif à pivot double 5 et du dispositif à pivot 6, et/ou d'une ou des mobilités actives de pivotement du bras de levage 2 et du bras de manutention 3 à l'aide des systèmes d'entraînement 200, 300 correspondants.

### Structure mobile

Le système 1 de manutention est avantageusement monté sur une structure mobile 9. De préférence la structure mobile 9 est munie de roues AV9, AR9.

La structure mobile 9 comprend un châssis 8 qui porte ledit système 1 de manutention et un système d'articulation 89 permettant à la base 100 du système de manutention 1 de pivoter autour d'un axe H89 orthogonal à l'axe VA1 de pivotement (d'orientation) de la base 100 (i.e. l'axe de pivotement VA1 du dispositif d'orientation 108 correspondant).

De préférence, la structure mobile 9 présente une direction longitudinale correspondant à la direction d'avancement (direction avant-arrière) en ligne droite de la structure 9. L'axe H89 est parallèle au plan d'appui au sol de la structure mobile 9 et orthogonal à ladite direction longitudinale de la structure mobile. Autrement dit l'axe H89 est latéral.

La structure mobile 9 comprend aussi un système de commande d'inclinaison 82, 83 permettant de commander l'inclinaison du système 1 de manutention, en particulier de la base 100, autour dudit axe horizontal H89 par rapport au châssis 8 de la structure mobile 9.

Un capteur 84 d'inclinaison permet de mesurer l'inclinaison, par rapport à l'horizontale, du châssis 8 de la structure mobile 9 qui porte ledit système 1 de manutention. Selon un mode de réalisation, le capteur 84 d'inclinaison mesure l'angle d'inclinaison du châssis 8 par rapport à une direction du plan horizontal qui est parallèle à la direction avant-arrière de la structure mobile 9, i.e. un angle d'inclinaison autour de l'axe H89. On peut aussi prévoir que le capteur 84 mesure un angle d'inclinaison selon une direction supplémentaire transversale ou orthogonale à l'axe H89 et que système de commande d'inclinaison soit configuré pour permettre de compenser les différentes inclinaisons mesurées afin de maintenir le plan P1 de la base 100 dans le plan horizontal.

La structure mobile comprend une unité de pilotage configurée pour piloter le système de commande d'inclinaison 82, 83 en fonction de l'inclinaison mesurée par le capteur 84, de manière à compenser l'inclinaison mesurée. Le pilotage du système de commande d'inclinaison 82, 83 permet ainsi de maintenir vertical chacun des axes VA1, V521, V531, V64 de pivotement verticaux du dispositif d'orientation 108, du dispositif à double pivot 5 et du dispositif à pivot 6, et donc de maintenir la base 100 du système de manutention 1 parallèle au plan horizontal. Le système de manutention est ainsi auto-stable.

Le système de commande d'inclinaison 82, 83 comprend un bras de levier 82 fixé à un support 81 qui est monté articulé sur le châssis 8 autour dudit axe H89 d'inclinaison du système de manutention 1, et un système 83 de commande de déplacement du bras de levier 82 entre une position haute et une position basse.

Le système de manutention 1 est porté par le support 81 par l'intermédiaire du dispositif d'orientation 108, sans mobilité d'inclinaison de la base 100 par rapport au support 81.

Le système 83 de commande permet ainsi d'ajuster l'inclinaison de la base 100 du système de manutention 1 par rapport au châssis 8 de la structure mobile 9 avant la manutention d'objet, et de préférence en temps réel. Cela permet de bénéficier d'une compensation des dénivelés de terrain et/ou des rampes d'insertion dans les conteneurs.

Le système 83 de commande de déplacement du bras de levier comprend un vérin, de préférence linéaire, lié à une extrémité du bras de levier 82. En particulier on peut prévoir que la tige du vérin soit articulée au bras de levier et de préférence que, au cours de l'actionnement du vérin, le déplacement de la liaison d'articulation de la tige au bras de levier soit guidé dans un chemin de guidage, par exemple en arc de cercle.

Avantageusement, la structure mobile 9 comprend des roues directionnelles motorisées arrière AR9 et des roues folles omnidirectionnelles avant AV9.

Une telle conception des roues permet, en combinaison avec le système de compensation angulaire qui permet de maintenir l'horizontalité de la base du système de manutention 1, de bénéficier d'un déplacement de la structure mobile 9 avec une stabilité du système de manipulation dans des conteneurs, même dans le cas de sols irréguliers et/ou de pentes.

La structure mobile est avantageusement équipée d'un système de commande en déplacement permettant de commander sa direction et son avancement, et de préférence sa vitesse de déplacement.

Le système de manutention peut ainsi être amené aisément dans un conteneur en vue du déchargement du conteneur.

L'utilisateur peut commander le bras de manutention en hauteur et en rayon pour accéder à un endroit donné, par exemple à un colis donné pour l'extraire.

Selon un mode de réalisation de l'invention, la structure mobile comprend un portique à travers lequel peut être introduit un convoyeur à rouleaux pour pouvoir déposer les objets saisis sur ledit convoyeur.

La combinaison des bras 2, 3, du dispositif à double pivot 5 et du dispositif à pivot 6 et du dispositif d'orientation 108 fournit une fluidité de déplacement du système de préhension 4 qui permet à l'opérateur de manutentionner aisément le système de préhension 4 pour la saisie d'un objet et de déplacer aisément l'objet saisi pour le décharger à un endroit donné.

Le dispositif à pivot 6 peut être muni de différents types de systèmes de préhension, encore appelés effecteurs, en fonction du type d'objet à manutentionner ou manipuler. Le système de préhension peut ainsi comprendre un système de saisie à déport de charge, par exemple muni de ventouses.

Le système de préhension 4 peut être configuré pour saisir un ou plusieurs objets simultanément.

### Unité de pilotage

On peut prévoir que le système de manutention 1 soit pourvu d'une unité de pilotage pour le pilotage des systèmes d'entrainement à pivotement des bras 2 et 3, et que la structure mobile 9 soit munie d'une unité de pilotage distincte pour la commande de l'inclinaison du système de manutention 1 par rapport au châssis 8, et de préférence du déplacement au sol de la structure mobile 9. En variante, lesdites unités de pilotages peuvent être communes en tout ou partie.

La ou chaque unité de pilotage se présente par exemple sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre sous forme de programme informatique ou via des composants matériels (p. ex. des réseaux de portes programmables). En particulier, les fonctions et étapes opérées par l'unité de pilotage, notamment pour la commande des moteurs peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array, ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application). Il est aussi possible de combiner des parties informatiques et des parties électroniques.

L'unité de pilotage est ainsi une unité électronique et/ou informatique. Lorsqu'il est précisé que ladite unité est configurée pour réaliser une opération donnée, cela signifie que l'unité comprend des instructions informatiques et les moyens d'exécution correspondants qui permettent de réaliser ladite opération et/ou que l'unité comprend des composants électroniques correspondants.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Système (1) de manutention d'objet, par exemple de cartons ou colis, par exemple stocké dans un conteneur, **caractérisé en ce que** ledit système comprend :
- une base (100) présentant une face de dessous (101) qui s'étend dans un plan (P1), la base (100) étant montée sur un dispositif d'orientation (108) permettant à la base (100) de pivoter autour d'un axe (VA1), dit premier axe vertical,
- un premier bras (2), appelé bras de levage, porté par la base (100) et monté pivotant par rapport à la base (100) entre une position abaissée et une position levée, autour d'un axe (H2), appelé premier axe horizontal, qui est orthogonal audit premier axe vertical (VA1), et parallèle au plan (P1) de la face de dessous (101) de la base (100);
- un système (200) d'entrainement en déplacement du bras de levage (2) configuré pour entrainer en pivotement le bras de levage (2), autour dudit premier axe horizontal (H2);
- un deuxième bras (3), appelé bras de manutention;
- un dispositif de liaison à double pivot (5) articulé au bras de levage (2) autour d'un deuxième axe (H52), dit deuxième axe horizontal, le bras de manutention (3) étant articulé au dispositif de liaison à double pivot (5) autour d'un axe (H53), dit troisième axe horizontal;
- un système (300) d'entrainement en déplacement du bras de manutention (3) configuré pour entrainer en pivotement le bras de manutention (3) par rapport au dispositif de liaison à double pivot (5), autour dudit troisième axe horizontal (H53);
- un dispositif de liaison à pivot (6) articulé au bras de manutention (3) autour d'un axe (H63), dit quatrième axe horizontal, parallèle au troisième axe horizontal (H53);
- un système de préhension (4) porté de manière directe ou indirecte par le dispositif de liaison à pivot (6), le système de préhension (4) étant monté mobile à pivotement autour d'un axe (V64), appelé axe de pivotement vertical interne, du dispositif de liaison à pivot (6);
le bras de levage (2) comprenant un premier mécanisme, appelé premier mécanisme de parallélogramme (25), configuré pour maintenir l'orientation du dispositif de liaison à double pivot (5) au cours du pivotement du bras de levage (2) par rapport à la base (100);
le bras de manutention (3) comprenant un deuxième mécanisme, appelé deuxième mécanisme de parallélogramme (336), configuré pour maintenir l'orientation du dispositif de liaison à pivot (6) au cours du pivotement du bras de manutention (3) par rapport au dispositif de liaison à double pivot (5) autour du troisième axe horizontal (H53).

2. Système selon la revendication 1, dans lequel le premier mécanisme de parallélogramme (25) comprend une barre (25), de préférence en acier, de préférence logée dans le bras de levage (2), dont une extrémité (251) est articulée à un élément (12) solidaire de la base (100), l'autre extrémité (255) étant articulée à un élément (522) du dispositif de liaison à double pivot (5).

3. Système selon l'une quelconque des revendications précédentes, dans lequel le deuxième mécanisme de parallélogramme (336) comprend un système de câble (336), de préférence logé dans le bras de manutention (3), relié d'une part à une poulie (35) qui relie le bras de manutention (3) au dispositif de liaison à double pivot (5), et relié d'autre part à une poulie (63) qui relie le dispositif de liaison à pivot (6) audit bras de manutention (3).

4. Système selon la revendication 3, dans lequel le système (300) d'entrainement en déplacement du bras de manutention (3) comprend :
- un système de commande de déplacement du système de câble (336);
- un moteur (302), de préférence électrique, de préférence muni d'un réducteur, qui permet d'actionner le système de commande de déplacement du système de câble (336) pour déplacer le système de câble (336) de sorte que, les poulies (35, 63) du bras de manutention étant entrainées en pivotement par le système de câble, le bras de manutention (3) pivote en montée ou en descente.

5. Système selon la revendication 4, dans lequel le système de commande de déplacement du système de câble (336) comprend :
- un système de vis (304), de préférence vis à billes,
- un chariot (306) configuré pour être déplaçable en translation par actionnement de la vis à bille, le système de câble (336) étant fixé au chariot (306);
ledit moteur (302) étant configuré pour actionner le système de vis (304) pour déplacer le chariot (306) et ainsi le système de câble (336).

6. Système selon l'une quelconque des revendications précédentes, dans lequel le système d'entraînement (300) en déplacement du bras de manutention (3) est logé dans le bras de manutention (3).

7. Système selon l'une quelconque des revendications précédentes, dans lequel le dispositif de liaison à double pivot (5) qui relie le bras de manutention (3) au bras de levage (2), comprend :
- un corps de liaison (51) central;
- une première partie (52) montée mobile à pivotement à l'extrémité du bras de levage (2) autour dudit deuxième axe horizontal (H52),
ladite première partie (52) étant aussi montée mobile à pivotement sur le corps de liaison (51) central autour d'un axe (V521), orthogonal audit deuxième axe horizontal (H52), appelé premier axe de pivotement vertical interne ;
- une deuxième partie (53) montée mobile à pivotement sur le corps de liaison (51) central autour d'un axe (V531), appelé deuxième axe de pivotement vertical interne, qui est parallèle audit premier axe (V521) de pivotement vertical interne de la première partie (52);
la deuxième partie (53) étant aussi montée mobile à pivotement à l'extrémité du bras de manutention (3), qui est opposée à l'extrémité dudit bras de manutention (3) équipée du dispositif de liaison à pivot (6), autour dudit troisième axe horizontal (H53) qui est orthogonal à l'axe de pivotement vertical interne (V531) de la deuxième partie (53).

8. Système selon l'une quelconque des revendications précédentes, dans lequel le dispositif de liaison à double pivot (5), le dispositif de liaison à pivot (6), et, de préférence, le dispositif d'orientation (108) sont passifs.

9. Système selon l'une quelconque des revendications précédentes, dans lequel le système comprend :
- un système de capteur d'effort configuré pour mesurer un effort appliqué par un opérateur sur le système de manutention (1) pour le déplacement du système de préhension (4);
- une unité de pilotage configurée pour commander l'un ou chacun des systèmes d'entrainement (200, 300) pour assister l'opérateur dans le déplacement du système de préhension (4).

10. Système selon l'une quelconque des revendications précédentes, dans lequel le système de manutention (1) comprend :
- une turbine (790) permettant de générer un flux d'air de soufflage et un flux d'air d'aspiration ;
- un distributeur (780) configuré pour, selon une première configuration, diriger le flux d'air de soufflage vers une ouverture à l'air libre (AL) et diriger le flux d'air d'aspiration à une entrée (E4) du système de préhension (4) pour permettre de saisir un objet par aspiration avec le système de préhension (4); et
selon une deuxième configuration, diriger le flux d'air d'aspiration vers l'ouverture d'air libre (AL) et diriger le flux d'air de soufflage vers l'entrée (E4) du système de préhension (4) pour permettre de souffler et relâcher un objet saisi par le système de préhension (4).

11. Ensemble de manutention comprenant un système (1) de manutention selon l'une quelconque des revendications précédentes; et une structure mobile (9), de préférence montée sur roues (AV9, AR9), ladite structure mobile (9) comprenant :
- un châssis (8) qui porte ledit système (1) de manutention;
- un système d'articulation (89) permettant au système de manutention (1) de pivoter autour d'un axe (H89), dit axe d'inclinaison, orthogonal à l'axe (VA1) de pivotement du dispositif d'orientation (108) de la base (100);
- un capteur (84) d'inclinaison permettant de mesurer l'inclinaison, par rapport à l'horizontale, du châssis (8) de la structure mobile (9) qui porte ledit système (1) de manutention;
- un système de commande d'inclinaison (82, 83) permettant de commander l'inclinaison du système (1) de manutention autour dudit axe d'inclinaison (H89) par rapport au châssis (8) de la structure mobile (9);
- une unité de pilotage configurée pour piloter le système de commande d'inclinaison (82, 83) en fonction de l'inclinaison mesurée par le capteur (84), de manière à maintenir vertical chacun des axes (VA1, V521, V531,V64) de pivotement verticaux du dispositif à double pivot (5), du dispositif à pivot (6), et du dispositif d'orientation (108).

12. Ensemble selon la revendication 11, dans lequel le système de commande d'inclinaison (82, 83) comprend :
- un bras de levier (82) fixé à un support (81) qui est monté articulé sur le châssis (8) autour dudit axe (H89) d'inclinaison du système de manutention (1), le système de manutention (1) étant porté par le support (81) par l'intermédiaire du dispositif d'orientation (108);
- un système (83) de commande de déplacement du bras de levier (82) entre une position haute et une position basse.

13. Ensemble selon la revendication 12, dans lequel le système (83) de commande de déplacement du bras de levier comprend un vérin, de préférence linéaire, lié au bras de levier (82).

14. Ensemble selon l'une quelconque des revendications 11 à 13, dans lequel la structure mobile (9) comprend des roues directionnelles motorisées arrière (AR9) et des roues folles omnidirectionelles avant (AV9).
